(19) Europäisches Patentamt
European Patent Office
Office européen des brevets

(11) Veröffentlichungsnummer: **0 004 074**
**B1**

# (12) EUROPÄISCHE PATENTSCHRIFT

(45) Veröffentlichungstag der Patentschrift: **02.09.81**

(51) Int. Cl.³: **C 08 G 77/38**, C 08 G 77/14, C 10 M 3/44

(21) Anmeldenummer: **79100684.4**

(22) Anmeldetag: **08.03.79**

(54) **Organosiloxane mit SiC-gebundenen Estergruppen, Verfahren zu ihrer Herstellung und ihre Verwendung.**

(30) Priorität: **08.03.78 DE 2809874**

(43) Veröffentlichungstag der Anmeldung: **19.09.79 Patentblatt 79/19**

(45) Bekanntmachung des Hinweises auf die Patenterteilung: **02.09.81 Patentblatt 81/35**

(84) Benannte Vertragsstaaten: **BE CH DE FR GB IT NL SE**

(56) Entgegenhaltungen: **DE-A-1 570 665**

(73) Patentinhaber: **Consortium für elektrochemische Industrie GmbH, Zielstattstrasse 20, D-8000 München 70 (DE)**

(72) Erfinder: **Hafner, Walter, Dr. Dipl.-Chem., Sommerfeld 15, D-8024 Furth (DE)**
Erfinder: **Markl, Erich, Terofalstrasse 41, D-8000 München 21 (DE)**
Erfinder: **Eibel, Ludwig, Passauer Strasse 170, D-8000 München 70 (DE)**
Erfinder: **Kreis, Gerhard, Dr. Dipl.-Chem., Springerstrasse 7, D-8000 München 71 (DE)**
Erfinder: **Samrowski, Dietrich, Grünwalder Strasse 47, D-8000 München 90 (DE)**
Erfinder: **Wick, Manfred, Dr. Dipl.-Chem., Mesnergasse 5, D-8162 Schliersee (DE)**
Erfinder: **Deubzer, Bernward, Dr. Dipl.-Chem., Virchowstrasse 14, D-8263 Burghausen (DE)**
Erfinder: **Friedrich, Wilhelm, Ernst-Platz Strasse 34, D-8000 München 50 (DE)**

EP 0 004 074 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Organosiloxane mit SiC-gebundenen Estergruppen, Verfahren zu ihrer Herstellung und ihre Verwendung

Organopolysiloxane mit SiC-gebundenen Estergruppen, Verfahren zu ihrer Herstellung und ihre Verwendung z. B. als Schmiermittel sind bereits bekannt. Einschlägige Druckschriften sind beispielsweise US-PS 27 23 987, patentiert: 15. November 1955, J. L. Speier, assignor to Dow Corning Corporation, wobei diese Patentschrift FR-PS 11 17 541 entspricht, US-PS 34 50 736, patentiert: 17. Juni 1969, F. G. A. De Monterey, assignor to Mobil Oil Corporation, und US-PS 38 59 321, ausgegeben: 7. Januar 1975, F. J. Traver, assignor to General Electric Company. Gegenüber den bisher bekannten Organopolysiloxanen mit SiC-gebundenen Estergruppen haben die erfindungsgemäßen bzw. erfindungsgemäß hergestellten Organopolysiloxane insbesondere den Vorteil, daß sie höhere Oxydationsbeständigkeit besitzen.

Gegenstand der Erfindung sind Organosiloxane mit SiC-gebundenen Estergruppen, dadurch gekennzeichnet, daß sie mindestens eine Einheit der allgemeinen Formel

$$ROOCCH_2CH(COOR)CH_2CHR'CH_2Si(CH_3)_aO_{\frac{3-a}{2}}$$

worin R gleiche oder verschiedene, von aliphatischen Mehrfachbindungen freie einwertige, gegebenenfalls ein Äthersauerstoffatom aufweisende Kohlenwasserstoffreste mit 1 bis 12 Kohlenstoffatomen, R' Wasserstoff oder $CH_3$ und a 0, 1 oder 2 bedeutet, enthalten.

Beispiele für Kohlenwasserstoffreste R sind Alkylreste, wie der Methyl-, Äthyl-, n-Propyl-, Isopropyl-, n-Butyl-, sec.-Butyl-, tert.-Butyl-, 4-Methylphenyl- und 2-Äthylhexylrest sowie Heptyl- und Dodecylreste; Cycloalkylreste, wie der Cyclohexylrest; Arylreste, wie der Phenylrest; Alkarylreste, wie Tolylreste; und Aralkylreste, wie der 3-Phenylpropylrest, und der 2,2-Dimethyl-3-phenylpropylrest.

Beispiele für Kohlenwasserstoffreste R mit einem Äthersauerstoffatom sind Alkoxyalkylreste, wie der 2-Methoxyäthylenrest und der 2-Äthoxyäthylenrest.

Ist R beispielsweise ein Methyl-, 2,2-Dimethylpentyl- oder 2,2-Dimethyl-3-phenylpropylrest, so haben die erfindungsgemäßen bzw. erfindungsgemäß hergestellten Organosiloxane eine höhere Viskosität als wenn R z.B. ein n-Butyl- oder 2-Methoxyäthylenrest ist.

Vorzugsweise sind die restlichen Einheiten in den erfindungsgemäßen bzw. erfiundungsgemäß hergestellten Organosiloxanen solche der allgemeinen Formel

$$R''_bSiO_{\frac{4-b}{2}}$$

worin R'' gleiche oder verschiedene, von aliphatischen Mehrfachbindungen freie, gegebenenfalls halogenierte Kohlenwasserstoffreste mit 1 bis 10 Kohlenstoffatomen und b 0, 1, 2 oder 3 bedeutet.

Die oben angegebenen Beispiele für Kohlenwasserstoffreste R, soweit sie weniger als 11 Kohlenstoffatome aufweisen, gelten im vollen Umfang auch für die Kohlenwasserstoffreste R''. Weitere Beispiele für Kohlenwasserstoffreste R'' sind die verschiedenen isomeren Decylreste.

Beispiele für halogenierte Kohlenwasserstoffreste R'' sind der 1,1,1-Trifluorpropylrest und o-, p- und m-Chlorphenylreste.

Insbesondere wegen der leichteren Zugänglichkeit sind jedoch vorzugsweise mindestens 50% der Anzahl der Reste R'' Methylreste.

Vorzugsweise liegen in den erfindungsgemäßen bzw. erfindungsgemäß hergestellten Organosiloxanen mit SiC-gebundenen Estergruppen insgesamt 2 bis 300 Siliciumatome je Molekül vor. Weiterhin ist bevorzugt, daß durchschnittlich insgesamt 1,8 bis 3 SiC-gebundene organische Reste je Si-Atom vorliegen, so daß die erfindungsgemäßen bzw. erfindungsgemäß hergestellten Organosiloxane flüssig sind.

Gegenstand der Erfindung ist weiterhin ein Verfahren zum Herstellen von Organosiloxanen mit SiC-gebundenen Estergruppen durch Anlagern von Ester mit einer aliphatischen Mehrfachbindung im Säurerest an Organosiloxan mit Si-gebundenem Wasserstoff in Gegenwart von die Anlagerung von Si-gebundenem Wasserstoff an aliphatische Mehrfachbindung förderndem Katalysator, dadurch gekennzeichnet, daß als Ester mit einer aliphatischen Mehrfachbindung im Säurerest mindestens ein Diester der Allylbernsteinsäure und/oder Methallylbernsteinsäure verwendet wird, wobei dieser Diester die allgemeine Formel

$$ROOCCH_2CH(COOR)CH_2CR'{=}CH_2$$

hat, worin R und R' die oben dafür angegebene Bedeutung hat.

Diester der Allyl- oder Methallylbernsteinsäure können in bekannter oder an sich bekannter Weise durch Umsetzung von Alkoholen mit Allyl- bzw. Methallylbernsteinsäureanhydrid hergestellt werden. Diese Säureanhydride sind z. B. durch die Umsetzung von Propylen bzw. Isobutylen mit Maleinsäureanhydrid (vgl. Alder et al., Berichte der Deutschen Chemischen Gesellschaft, Bd. 76, 1943,

Seite 44, und Phillips et al., Journal of the American Chemical Society, Bd. 80, 1958, Seite 3665) leicht zugänglich.

Als Organosiloxane mit Si-gebundenem Wasserstoff können auch im Rahmen der Erfindung alle Organopolysiolxane mit Si-gebundenem Wasserstoff eingesetzt werden, an die bisher organische Verbindungen mit mindestens einer organischen Mehrfachbindung angelagert werden konnten.

Beispiele für bei dem erfindungsgemäßen Verfahren einsetzbare Organosiloxane sind somit 1,1,3,3-Tetramethyldisiloxan und Organopolysiloxane der allgemeinen Formel

$$R_3''Si(OSiR_2'')_m(OSiHR'')_{298-m}OSiR_3''$$

worin R'' die oben dafür angegebene Bedeutung hat und m 0 oder eine ganze Zahl im Wert von 1 bis 297 ist. Es können aber auch cyclische Siloxane, wie solche der allgemeinen Formel $(CH_3SiHO)_n$, wobei n eine ganze Zahl im Wert von 3 bis 6 ist, oder verzweigte Siloxane, wie solche der allgemeinen Formel $HSi[OSi(CH_3)_3]_3$, eingesetzt werden.

Als die Anlagerung von Si-gebundenem Wasserstoff an aliphatische Mehrfachbindungen fördernde Katalysatoren können ebenfalls auch im Rahmen der Erfindung die gleichen Katalysatoren verwendet werden, mit denen bei den bisher bekannten Verfahren die Anlagerung von Verbindungen mit mindestens einer aliphatischen Mehrfachbindung an Si-gebundenen Wasserstoff gefördert werden konnte. Beispiele für im Rahmen der Erfindung verwendbare, die Anlagerung von Si-gebundenem Wasserstoff an aliphatische Mehrfachbindungen fördernde Katalysatoren sind somit metallisches und feinverteiltes Platin, Ruthenium, Rhodium, Palladium und Iridium, wobei sich diese Metalle jeweils auf Trägern, wie Siliciumdioxyd, Aluminiumdioxyd oder Aktivkohle, befinden können, und Verbindungen oder Komplexe dieser Elemente, wie $PtCl_4$, $PtCl_6 \cdot 6\,H_2O$, $Na_2PtCl_4 \cdot 4\,H_2O$, Platin-Olefin-Komplexe, Platin-Alkohol- oder Platin-Alkoholat-Komplexe, Platin-Äther-Komplexe, Platin-Aldehyd-Komplexe, Platin-Keton-Komplexe, Platin-Vinylsiloxan-Komplexe, insbesondere Platin-Divinyltetramethyldisiloxan-Komplexe mit oder ohne Gehalt an nachweisbarem Halogen, Bis(gamma-picolin)-platindichlorid, Trimethylendipyridin-platindichlorid, ferner Eisen-, Nickel- und Kobaltcarbonyle.

Wird als die Anlagerung von Si-gebundenem Wasserstoff an aliphatische Mehrfachbindung metallisches Platin, eine Platinverbindung und/oder ein Platinkomplex und/oder metallisches Rhodium eingesetzt, so werden diese Katalysatoren vorzugsweise in Mengen von 0,001 bis 0,02 Gewichtsprozent je Gramm Si-gebundenen Wasserstoffs eingesetzt.

Vorzugsweise werden Allyl- und/oder Methallylbernsteinsäureester im Überschuß angewandt.

Die bei dem erfindungsgemäßen Verfahren anzuwendenden Temperaturen sind nicht entscheidend. Meist betragen sie 18 bis 180° C, wobei Temperaturen im Bereich von 80 bis 160° C, insbesondere 110 bis 130° C, bevorzugt sind. Meist liegt der Druck der umgebenden Atmosphäre vor. Falls erwünscht, können jedoch auch höhere oder niedrigere Drücke als 1 bar oder etwa 1 bar angewendet werden.

Werden bei dem erfindungsgemäßen Verfahren Lösungsmittel mitverwendet, was keineswegs unbedingt erforderlich ist, so können diese Lösungsmittel die gleichen gegenüber Reaktionsteilnehmern und Katalysator inerten Lösungsmittel sein wie bei den bisher bekannten Verfahren zum Anlagern von Verbindungen mit mindestens einer aliphatischen Mehrfachbindung an Si-gebundenen Wasserstoff. Beispiele für solche Lösungsmittel sind Benzine, z. B. Alkangemische mit einem Siedebereich von 80 bis 110° C bei 1 bar, Benzol, Toluol und Xylole, halogenierte Alkane mit 1 bis 6 Kohlenstoffatomen, wie Methylenchlorid, Trichloräthylen und Perchloräthylen, Äther, wie Di-n-butyläther, Ester, wie Äthylacetat, und Ketone, wie Methyläthylketon und Cyclohexanon.

Werden organische Lösungsmittel mitverwendet, so werden sie vorzugsweise in Mengen von 50 bis 400 Gewichtsprozent, bezogen auf das Gewicht eingesetztem Organosiloxan mit Si-gebundenem Wasserstoff, verwendet.

Nach der Anlagerung von Diester der Allylbernsteinsäure an Organosiloxanen mit Si-gebundenem Wasserstoff kann überschüssiger und insbesondere deshalb nicht umgesetzter Ester durch Destillation zurückgewonnen und gegebenenfalls nach einer fraktionierten Destillation wieder für die Anlagerung von Organosiloxan mit Si-gebundenem Wasserstoff eingesetzt werden.

Die erfindungsgemäßen Organosiloxane sind jedoch nicht nur durch das erfindungsgemäße Verfahren, sondern z. B. auch durch Hydrolyse von Silanen der allgemeinen Formel

$$ROOCCH_2CH(COOR)CH_2CHR'CH_2Si(CH_3)_aX_{3-a}$$

worin R, R' und a jeweils die oben dafür angegebene Bedeutung haben und X gleiche oder verschiedene hydrolysierbare Atome, insbesondere Chloratome, oder gleiche oder verschiedene hydrolysierbare Gruppen, insbesondere Methoxy- oder Äthoxygruppen, dargestellt, gegebenenfalls im Gemisch mit Silanen der allgemeinen Formel

$$R_b''SiX_{4-b}$$

worin R'', b und X jeweils die oben dafür angegebene Bedeutung haben, erhältlich. Silane der

allgemeinen Formel

$$ROOCCH_2CH(COOR)CH_2CHR'CH_2Si(CH_3)_aX_{3-a}$$

sind ihrerseits wiederum z. B. durch Anlagerung von mindestens einem Diester der allgemeinen Formel

$$ROOCCH_2CH(COOR)CH_2CR'{=}CH_2$$

worin R und R' jeweils die dafür angegebene Bedeutung haben, z. B. von Allylbernsteinsäure-di-n-butylester, an mindestens ein Silan der allgemeinen Formel

$$HSi(CH_3)_aX_{3-a}$$

worin X und a jeweils die oben dafür angegebene Bedeutung haben, z. B. an Trichlorsilan, in Gegenwart von die Anlagerung von Si-gebundenem Wasserstoff an aliphatische Mehrfachbindung förderndem Katalysator, für den bereits oben zahlreiche Beispiele angegeben wurden, erhältlich. Falls bei dieser Hydrolyse Estergruppen verseift wurden, können die freigewordenen Carboxylgruppen wieder verestert werden.

Eine bevorzugte Verwendung der erfindungsgemäßen bzw. erfindungsgemäß hergestellten Organosiloxane ist diejenige als Schmiermittel, einschließlich derjenigen als Fadengleitmittel für anorganische oder organische Fasern, wie Polyestergarnen, und derjenigen als Metallbearbeitungsöle, sowie als Hydraulik-Flüssigkeiten.

Die erfindungsgemäßen bzw. erfindungsgemäß hergestellten Organosiloxane können durch Zugabe von Verdickungsmitteln zu Pasten mit fettartiger Konsistenz verarbeitet werden. Beispiele für Verdickungsmittel sind Polytetrafluoräthylen, Polyharnstoffe, Phthalocyanine, Tone, Siliciumdioxyde mit einer BET-Oberfläche von mindestens 50 m²/g und Metallseifen, wie Lithiumstearat, Lithium-12-hydroxystearat, Aluminiumpalmitat und Calciumstearat.

Die erfindungsgemäßen bzw. erfindungsgemäß hergestellten Organosiloxane können auch mit anderen, bei der Bereitung von Schmiermitteln herkömmlicherweise verwendeten Stoffen, wie rein organischen Estern, z. B. Carbonsäureestern von Trimethylolpropan oder Pentaerythrit, oder Antioxydantien vermischt werden.

## Beispiel 1

In einem mit Rührer, Tropftrichter, Rückflußkühler und Thermometer ausgestatteten 2 l-Vierhalskolben werden 1025 g Allylbernsteinsäuredi-n-butylester nach dem Vermischen mit 0,5 l Toluol und 40 mg Trimethylenplatinpyridin-dichlorid auf 130° C erwärmt. Zu dieser erwärmten Mischung werden unter Rühren 200 g eines durch Trimethylsiloxygruppen endblockierten Methylhydrogenpolysiloxans mit durchschnittlich 17 Methylhydrogensiloxaneinheiten je Molekül tropfenweise gegeben. Dabei wird die Temperatur durch Außenkühlung mit Wasser bei 130° C gehalten. Nach Beendigung der Zugabe des Siloxans wird noch zweimal 8 Stunden bei 120 bis 130° C gerührt. Danach wird bei einer Probe der Mischung bei Zugabe von alkoholischem Natriumhydroxyd kein Si-gebundener Wasserstoff mehr abgespalten.

Durch Abdestillieren des Toluols bei etwa 16 nbar und des überschlüssigen Allylbernsteinsäureesters wird in praktisch 100%iger Ausbeute (d. Th.) ein Öl erhalten. Dieses Öl hat bei −20° C eine Viskosität von 39,4 Pa · s, bei 23° C eine Viskosität von 1,26 Pa · s und bei 140° C eine Viskosität von 0,034 Pa · s.

Zur Bestimmung der Oxydationsbeständigkeit werden 2 g dieses Öls in einem offenen, schrägliegenden Prüfröhrchen mit einem Durchmesser von 12 mm unter Luftzutritt auf 150° C erwärmt. Dabei ist erst nach mehr als 1000 Stunden und, wenn die Probe vor dem Erwärmen mit 0,5 Gewichtsprozent Dilaurylthiodipropionat, 0,5 Gewichtsprozent 2,6-Di-tert.-butyl-4-methylphenol und 0,5 Gewichtsprozent 4-Hydroxy-3,5-di-tert.-butylbenzyl-phosphonsäuremonoäthylester als Antioxydanzien vermischt wurde, erst nach mehr als 5000 Stunden eine Gelierung zu beobachten.

Die Versagenslast des Öls im 4-Kugel-Verschleißtest (1400 Umdrehungen je Minute, 1 Minute Laufzeit) beträgt 2200/2400 N (Versagenslast = Übergang in die sogenannte Verschleißhochlage, vgl. F. Nordmeyer et al., Erdöl und Kohle-Erdgas-Petrochemie, Bd. 25, 1972, Seite 200).

Die Versagenslast einer Mischung mit fettartiger Konsistenz aus 2 Gewichtsteilen des Öls und 1 Gewichtsteil Lithiumstearat im wie oben angegebenen betriebenen 4-Kugel-Verschleißtest beträgt 1900/2100 N.

## Beispiel 2

In einem mit Rührer, Rückflußkühler und Thermometer ausgestatteten 1 l-Dreihalskolben werden 0,1 l Toluol nach Vermischen mit 128 g eines durch Trimethylsiloxygruppen endblockierten

Organopolysiloxans aus durchschnittlich 8 Dimethylsiloxan- und 8 Methylhydrogensiloxaneinheiten je Molekül, 30 g Allylbernsteinsäuredimethylester und 20 mg Trimethylenplatindipyridin-dichlorid unter Rühren auf 115°C erwärmt. Zu dieser erwärmten Mischung werden durch den Rückflußkühler unter Rühren weitere 160 g Allylbernsteinsäuredimethylester tropfenweise gegeben. Nachdem noch 12 Stunden bei 120 bis 125°C gerührt wurde, werden nochmals 30 g Allylbernsteinsäuredimethylester zugegeben und schließlich wird nochmals 7 Stunden auf 120 bis 125°C erwärmt. Danach wird bei einer Probe der Mischung bei Zugabe von alkoholischem Natriumhydroxyd kein Si-gebundener Wasserstoff mehr abgespalten.

Durch Abdestillieren des Toluols und des überschüssigen Allylbernsteinsäureesters werden 280 g eines Öls erhalten. Dieses Öl hat eine Viskosität von 1,02 Pa · s bei 23°C und von 0,023 Pa · s bei 140°C.

Bei der in Beispiel 1 beschriebenen Prüfung auf Oxydationsbeständigkeit wird nach etwa 1500 Stunden ohne Mitverwendung von Antioxydantien eine Gelierung beobachtet.

Die Versagenslast des Öls im wie in Beispiel 1 angegeben betriebenen 4-Kugel-Verschleißtest beträgt 900/1200 N.

## Beispiel 3

In dem mit Rührer, Rückflußkühler und Thermometer ausgestatteten 1 l-Dreihalskolben werden 0,1 l Toluol nach Vermischen mit 100 g eines durch Trimethylsiloxygruppen endblockierten Organopolysiloxans aus durchschnittlich 10 Dimethylsiloxan- und 5 Methylhydrogensiloxaneinheiten je Molekül, 30 g Allylbernsteinsäuredi-(2,2-dimethylpentyl)-ester und 20 mg Trimethylenplatindipyridin-dichlorid unter Rühren auf 115°C erwärmt. Zu dieser erwärmten Mischung werden unter Rühren weitere 130 g des Allylbernsteinsäureesters durch den Rückflußkühler tropfenweise gegeben. Nachdem noch 12 Stunden bei 120 bis 125°C gerührt wurde, werden nochmals 20 g des Allylbernsteinsäureesters zugegeben und schließlich wird nochmals 7 Stunden auf 120 bis 125°C erwärmt.

Durch Abdestillieren des Toluols und des überschüssigen Allylbernsteinsäureesters werden 225 g eines Öls erhalten. Dieses Öl hat eine Viskosität von 77 Pa · s bei −20°C, von 1,38 Pa · s bei 23°C und von 0,025 Pa · s bei 140°C.

Bei der in Beispiel 1 beschriebenen Prüfung auf Oxydationsbedständigkeit wird ohne Mitverwendung von Antioxydantien nach 500 Stunden und, wenn die Probe vor dem Erwärmen mit 0,5 Gewichtsprozent Dilaurylthiodipropionat, 0,5 Gewichtsprozent Pentaerythrityltetrakis-3-(3,5-di-tert.-butyl-4-hydroxylphenyl)-propionat und 0,5 Gewichtsprozent 4-Hydroxy-3,5-di-tert.-butylbenzyl-phosphonsäuremonoäthylester vermischt wurde, erst nach mehr als 3000 Stunden eine Gelierung beobachtet.

## Beispiel 4

Ein Gemisch aus 180 g Allylbernsteinsäure-di-(2,2-dimethyl-3-phenylpropyl)-ester, 50 g Toluol und 20 mg Trimethylenplatindipyridin-dichlorid wird auf etwa 100°C erwärmt. Zu dieser erwärmten Mischung werden unter Rühren innerhalb von 30 Minuten 24 g 1,1,3,3-Tetramethyldisiloxan, die in 50 ml Toluol gelöst sind, tropfenweise gegeben. Dann wird die Temperatur noch 15 Stunden bei 110 bis 120°C gehalten. Danach wird bei einer Probe der Mischung bei Zugabe von alkoholischem Natriumhydroxyd kein Si-gebundener Wasserstoff mehr abgespalten.

Durch Abdestillieren des Toluols und des überschüssigen Allylbernsteinsäureesters werden etwa 150 g eines Öls mit einer Viskosität von etwa 15 Pa · s bei 23°C erhalten.

Bei der in Beispiel 1 beschriebenen Prüfung auf Oxydationsbeständigkeit wird erst nach über 500 Stunden ohne Mitverwendung von Antioxydantien eine Gelierung beobachtet.

Die Versagenslast des Öls im wie in Beispiel 1 angegebenen betriebenen 4-Kugel-Verschleißtest beträgt 800/1000 N.

## Beispiel 5

Ein Gemisch aus 200 g eines durch Trimethylsiloxygruppen endblockierten Organopolysiloxans aus durchschnittlich 17 Dimethylsiloxan- und 17 Methylhydrogensiloxaneinheiten je Molekül, 240 ml wasserfreiem Di-n-butyläther, 450 g Allylbernsteinsäuredi-n-butylester und 0,5 g Aktivkohle, auf der sich 5 Gewichtsprozent, bezogen auf das Gewicht der Kohle, metallisches Rhodium befinden, wird 18 Stunden bei 140°C gerührt. Dann wird bei etwa 16 mbar der größte Teil des Dibutyläthers abdestilliert und der Rückstand weitere 18 Stunden bei 140°C gerührt. Nach dem Abfiltrieren des Katalysators wird restlicher Dibutyläther und überschüssiger Allylbernsteinsäureester bei etwa 1 mbar abdestilliert. Dabei wird als Rückstand in etwa 95%iger Ausbeute (d. Th.) ein Öl mit einer Viskosität von 3,4 Pa · s bei 23°C erhalten.

Die Versagenslast des Öls im wie in Beispiel 1 angegeben betriebenen 4-Kugel-Verschleißtest

beträgt 1200/1400 N.

Die Versagenslast einer Mischung mit fettartiger Konsistenz aus 150 Gewichtsteilen des Öls und 56 Gewichtsteilen Polytetrafluoräthylen im wie in Beispiel 1 angegebenen betriebenen 4-Kugel-Verschleißtest beträgt 1800/2000 N.

Das in diesem Beispiel verwendete Polytetrafluoräthylen, das im Handel unter der Bezeichnung »Hostaflon (Registriertes Warenzeichen) TF 9205« erhältlich ist, hat ein mittleres Molekulargewicht von 35000 bis 100000. Die mittlere Teilchengröße beträgt etwa 5 bis 7 Mikrometer.

Beispiel 6

Ein Gemisch aus 150 g Toluol, 210 g eines durch Trimethylsiloxygruppen endblockierten Organopolysiloxans der in Beispiel 3 angegebenen Art, 30 g Allylbernsteinsäure-di-n-butylester und 20 mg Trimethylenplatindipyridin-dichlorid wird auf 120° C erwärmt. Zu dieser erwärmten Mischung werden unter Rühren innerhalb einer Stunde 270 g Allylbernsteinsäure-di-n-butylester gegeben. Nachdem noch 10 Stunden bei 125 bis 130° C gerührt wurde, werden nochmals 50 g Allylbernsteinsäuredibutylester und 10 mg der vorstehend erwähnten Platinverbindung zugegeben und schließlich wird 18 Stunden auf 130 bis 135° C erwärmt.

Durch Abdestillieren des Toluols und des überschüssigen Allylbernsteinsäureesters wurden 410 g eines Öls erhalten. Dieses Öl hat eine Viskosität von 2,83 Pa · s bei −20° C, von 0,335 Pa · s bei 23° C und von 0,017 Pa · s bei 140° C.

Bei der in Beispiel 1 beschriebenen Prüfung auf Oxydationsbeständigkeit wird ohne Mitverwendung von Antioxydantien nach 1500 Stunden, bei Mitverwendung der in Beispiel 3 angegebenen Antioxydantien in den in Beispiel 3 angegebenen Mengen erst nach mehr als 3800 Stunden eine Gelierung beobachtet.

Beispiel 7

Ein Gemisch aus 200 g eines Dimethylhydrogensiloxaneinheiten als endständige Einheiten aufweisenden Dimethylpolysiloxans aus durchschnittlich 32 Dimethylsiloxaneinheiten je Molekül, 100 ml Toluol und etwa 10 mg Trimethylenplatindipyridin-di-chlorid wird auf 115 bis 120° C erwärmt. Zu dieser erwärmten Mischung werden unter Rühren 55 g Allylbernsteinsäuredi-n-butylester tropfenweise gegeben. Nach Beendigung der Zugabe des Esters wird noch 5 Stunden bei 115 bis 120° C gerührt.

Durch Abdestillieren des Toluols und des überschüssigen Allylbernsteinsäureesters wird in praktisch 100%iger Ausbeute (d. Th.) ein Öl erhalten, das durch Bleicherde filtriert wird. Dieses Öl hat eine Viskosität von 0,222 Pa · s bei −20° C, von 0,047 Pa · s bei 23° C und von 0,015 Pa · s bei 80° C.

Bei der in Beispiel 1 beschriebenen Prüfung auf Oxydationsbeständigkeit wird erst nach mehr als 2000 Stunden ohne Mitverwendung von Antioxydantien eine Gelierung beobachtet.

Die Versagenslast des Öls im wie in Beispiel 1 angegebenen betriebenen 4-Kugel-Verschleißtest beträgt 500/700 N.

Beispiel 8

Ein Gemisch aus 280 g eines durch Trimethylsiloxygruppen endblockierten Organopolysiloxans aus durchschnittlich 15 Phenylmethylsiloxaneinheiten und 15 Methylhydrogensiloxaneinheiten je Molekül, 500 g Allylbernsteinsäure-di-n-butylester und 1 g Aktivkohle, auf der sich 1 Gewichtsprozent, bezogen auf das Gewicht der Kohle, metallisches Rhodium befindet, wird unter Rühren innerhalb 7 Stunden auf 150° C erwärmt und dann weitere 7 Stunden bei dieser Temperatur gerührt. Dann werden noch 0,3 g des in Beispiel 5 beschriebenen Aktivkohle/Rhodium-Gemisches zugegeben und es wird noch 12 Stunden bei 150° C gerührt. Nach dem Abfiltrieren des Katalysators wird überschüssiger Allylbernsteinsäureester bei etwa 1 mbar abdestilliert. Dabei wird als Rückstand in etwa 95%iger Ausbeute (d. Th.) ein Öl erhalten. Dieses Öl hat eine Viskosität von 740 Pa · s bei −20° C, von 3,2 Pa · s bei 23° C und von 0,356 Pa · s bei 80° C.

Bei der in Beispiel 1 beschriebenen Prüfung auf Oxydationsbeständigkeit wird unter Mitverwendung von 0,1 Gewichtsprozent Phenothiazin nach etwa 400 Stunden eine Gelierung beobachtet.

Die Versagenslast des Öls im wie in Beispiel 1 angegeben betriebenen 4-Kugel-Verschleißtest beträgt 1400/1500 N.

Beispiel 9

Ein Gemisch aus 400 g wasserfreiem Di-n-butyläther, 405 g Allylbernsteinsäure-di-n-butylester und 1 g der Aktivkohle, auf der sich 1 Gewichtsprozent, bezogen auf das Gewicht der Kohle, metallisches

Rhodium befindet, wird auf 130° C erwärmt. Zu diesem Gemisch werden unter Rühren innerhalb von 30 Minuten 180 g eines durch Trimethylsiloxagruppen endblockierten Methylhydrogensiloxans aus durchschnittlich 35 Methylhydrogensiloxaneinheiten je Molekül gegeben. Nach einer Stunde wird soviel 4-Methylenpenten-(1) mit solcher Geschwindigkeit zugegeben, daß die Temperatur nicht unter 130° C sinkt. Nach 60 Stunden wird nicht umgesetztes 4-Methylenpenten-(1) und Dibutyläther abdestilliert und frisches 4-Methylenpenten-(1) zugegeben. Die Gesamtmenge an eingesetztem 4-Methylenpenten-(1) beträgt etwa 250 g. Schließlich wird noch 30 Stunden bei 130 bis 140° C gerührt. Nach dem Abfiltrieren des Katalysators wird das Reaktionsgemisch bei einer Blasentemperatur von 170° C und 0,5 mbar von niedrig siedenden Bestandteilen befreit. Das dabei in etwa 95%iger Ausbeute (d. Th.) erhaltene Öl hat eine Viskosität von 93 Pa · s bei −20° C, von 2,5 pA · s bei 23° C und von 0,34 Pa · s bei 80° C.

Bei der in Beispiel 1 beschriebenen Prüfung auf Oxydationsbeständigkeit wird ohne Mitverwendung von Antioxydantien nach etwa 300 Stunden eine Gelierung beobachtet.

Die Versagenslast des Öls im wie in Beispiel 1 angegeben betriebenen 4-Kugel-Verschleißtest beträgt 1800/1900 N.

## Beispiel 10

Ein Gemisch aus 100 g Toluol, 35 g eines durch Trimethylsiloxygruppen endblockierten Methylhydrogenpolysiloxans aus durchschnittlich 30 Methylhydrogensiloxaneinheiten je Molekül und etwa 30 mg Trimethylenplatindipyridin-dichlorid wird auf 110 bis 115° C erwärmt. Zu dieser erwärmten Mischung werden unter Rühren 250 g Allylbernsteinsäuredi-(2-methoxyäthyl)-ester tropfenweise gegeben. Nach Beendigung der Zugabe des Esters wird noch 36 Stunden bei 120 bis 130° C gerührt.

Durch Abdestillieren des Toluols und des überschüssigen Allylbernsteinsäureesters wird in praktisch 100%iger Ausbeute (d. Th.) ein Öl erhalten.

Bei der in Beispiel 1 beschriebenen Prüfung auf Oxydationsbeständigkeit wird bei Mitverwendung der in Beispiel 3 angegebenen Antioxydantien in den in Beispiel 3 angegebenen Mengen erst nach etwa 3000 Stunden ohne Gelierung beobachtet.

Die Versagenslast des Öls im wie in Beispiel 1 angegeben betriebenen 4-Kugel-Verschleißtest beträgt mehr als 2000 N.

## Beispiel 11

Die in Beispiel 10 beschriebene Arbeitsweise wird wiederholt mit der Abänderung, daß anstelle der 250 g Allylbernsteinsäuredi-(2-methoxyäthyl)-ester die gleiche molare Menge an Allylbernsteinsäure-di-n-butylester verwendet wird.

## Beispiel 12

Die in Beispiel 10 beschriebene Arbeitsweise wird wiederholt mit der Abänderung, daß anstelle der 250 g Allylbernsteinsäuredi-(2-methoxyäthyl)-ester die gleiche molare Menge an Allylbernsteinsäure-di-methylester verwendet wird.

## Vergleichsversuch V1

Die in Beispiel 10 beschriebene Arbeitsweise wird wiederholt mit der Abänderung, daß anstelle der 250 g Allylbernsteinsäuredi-(2-methoxyäthyl)-ester die gleiche molare Menge an Undec-10-en-säuren-butylester verwendet wird.

## Vergleichsversuch V2

Die in Beispiel 10 beschriebene Arbeitsweise wird wiederholt mit der Abänderung, daß anstelle der 250 g Allylbernsteinsäuredi-(2-methoxyäthyl)-ester die gleiche molare Menge an Allylessigsäure-n-butylester verwendet wird.

## Vergleichsversuch V3

Die in Beispiel 10 beschriebene Arbeitsweise wird wiederholt mit der Abänderung, daß anstelle der 250 g Allylbernsteinsäuredi-(2-methoxyäthyl)-ester die gleiche molare Menge an Vinylessigsäure-n-butylester verwendet wird.

Vergleichsversuch V4

Die in Beispiel 10 beschriebene Arbeitsweise wird wiederholt mit der Abänderung, daß anstelle der 250 g Allylbernsteinsäuredi-(2-methoxyäthyl)-ester die gleiche molare Menge an Maleinsäuredi-n-butylester verwendet wird.

Vergleichsversuch V5

Die in Beispiel 10 beschriebene Arbeitsweise wird wiederholt mit der Abänderung, daß anstelle der 250 g Allylbernsteinsäuredi-(2-methoxyäthyl)-ester die gleiche molare Menge an Allyloxyessigsäuren-butylester verwendet wird.

Die gemäß Beispiel 11 und 12 sowie gemäß den Vergleichsversuchen V1 bis V5 erhaltenen Öle werden hinsichtlich ihrer Oxydationsbeständigkeit wie in Beispiel 1 angegeben geprüft. Die dabei mit und ohne Mitverwendung der in Beispiel 3 angegebenen Antioxydantien in den in Beispiel 3 angegebenen Mengen erhaltenen Ergebnisse sind in der folgenden Tabelle angegeben.

Tabelle

| Beispiel bzw. Vergleichsversuch | Eingesetzter Ester | Anzahl der Stunden, nach denen ohne Mitverwendung von Antioxydantien Gelierung beobachtet wird | Anzahl der Stunden, nach denen bei Mitverwendung von Antioxydantien Gelierung beobachtet wird |
|---|---|---|---|
| 11 | Allylbernsteinsäure-di-n-butylester | 200–400 | 600–800 |
| 12 | Allylbernsteinsäure-di-methylester | +) | mehr als 3500 |
| V1 | Undecensäurebutylester | weniger als 20 | 100–200 |
| V2 | Allylessigsäurebutylester | weniger als 20 | 50 |
| V3 | Vinylessigsäurebutylester | 40–60 | 200–300 |
| V4 | Maleinsäuredibutylester | 20–50 | weniger als 100 |
| V5 | Allyloxyessigsäurebutylester | nicht bestimmt | weniger als 100 |

+) Nicht bestimmt, vgl. jedoch Beispiel 2, gemäß dem der gleiche Ester eingesetzt wird.

Beispiel 13

Eine Lösung von 136 g Trichlorsilan in 150 g Toluol wird auf 60° C erwärmt. Zu dieser erwärmten Lösung werden unter Rühren 300 g Allylbernsteinsäuredi-n-butylester und 100 g $H_2PtCl_6 \cdot 6\,H_2O$, die vorher in 0,4 ml Cyclohexanon gelöst und dann mit dem Ester vermischt wurden, tropfenweise gegeben, wobei die Temperatur bis auf 85° C steigen gelassen wird. Dann wird noch 6 Stunden bei 95 bis 100° C gerührt. Die so erhaltene Lösung von Trichlorsilylpropylbernsteinsäuredi-n-butylester wird mit 117 g Trimethylchlorsilan vermischt. Zu dieser Silanmischung gibt man unter Rühren tropfenweise 100 g Wasser, wobei die Temperatur bei 30 bis 40° C gehalten wird. Nach 3 Stunden weiteren Rührens wird überschüssiges Wasser azeotrop abdestilliert. Die wasserfreie Lösung wird mit 3 g $FeCl_3$ (sublimiert) vermischt und 4 Stunden bei 40 bis 50° C gerührt, mit 100 g Butanol vermischt und 2 Stunden zum Sieden unter Rückfluß erwärmt, wobei das dabei entstehende Wasser mittels einer Dean-Stark-Falle entfernt wird. Dann wird durch Zugabe von $NaHCO_3$ und 10 ml Wasser das $FeCl_3$ zersetzt, filtriert und nach Vermischen mit 200 ml Wasser nochmals 2 Stunden gerührt. Nach Befreiung von bis zu 170° C Blasentemperatur bei 0,5 mbar siedenden Bestandteilen verbleiben 330 g eines Öls mit einer Viskosität von 0,043 Pa · s bei 80° C und 0,012 Pa · s bei 140° C.

Bei der in Beispiel 1 beschriebenen Prüfung auf Oxydationsbeständigkeit wird erst nach 4400 Stunden ohne Mitverwendung von Antioxydantien eine Gelierung beobachtet.

Die Versagenslast des Öls im wie in Beispiel 1 angegeben betriebenen 4-Kugel-Verschleißtest beträgt 1700/1900 N.

## Beispiel 14

Ein Gemisch aus 90 g eines durch Trimethylsiloxygruppen endblockierten Methylhydrogensiloxans aus durchschnittlich 10 Methylhydrogensiloxaneinheiten je Molekül, 150 ml Toluol und 20 mg Bis-(gamma-picolin)-platindichlorid wird auf 110 bis 120°C erwärmt. Zu dieser erwärmten Mischung werden unter Rühren innerhalb von 30 Minuten 350 g Allylbernsteinsäurediäthylester gegeben. Nach Beendigung der Zugabe des Esters wird noch 8 Stunden bei 135°C gerührt.

Nach Abdestillieren des Toluols und des überschüssigen Allylbernsteinsäureesters verbleiben als Rückstand 333 g eines Öls mit einer Viskosität von 0,96 Pa · s bei 23°C und 0,081 Pa · s bei 80°C.

Bei der in Beispiel 1 beschriebenen Prüfung auf Oxydationsbeständigkeit wird ohne Mitverwendung von Antioxydantien nach 500 Stunden und, wenn die Probe vor dem Erwärmen mit 0,5 Gewichtsprozent Dilaurylthiodipropionat, 0,5 Gewichtsprozent Pentaerythrityltetrakis-3-(3,5-di-tert.-butyl-4-hydroxylphenyl)-propionat und 0,1 Gewichtsprozent 4-Hydroxy-3,5-di-tert.-butylbenzyl-phosphonsäuremonoäthylester vermischt wurde, erst nach mehr als 3900 Stunden eine Gelierung beobachtet.

Die Versagenslast des Öls im wie in Beispiel 1 angegeben betriebenen 4-Kugel-Veschleißtest beträgt 1300/1500 N.

Das Bis-(gamm-picolin)-platindichlorid wurde hergestellt wie folgt:

20 g (48 mMol) $K_2PtCl_4$ werden in 150 ml Wasser gelöst und mit 7,5 g (96 mMol) gamm-Picolin versetzt. Die so erhaltene Mischung wird unter Rühren auf 70°C erwärmt, wobei ein schwachgelber Niederschlag ausfällt. Nach dem Abkühlen wird filtriert. Der Filterrückstand wird mit Wasser gewaschen und bei einem Druck von 1 µbar getrocknet. Es werden 15 g, das heißt 69 Gewichtsprozent, bezogen auf $K_2PtCl_4$, Bis-(gamma-picolin)-platindichlorid erhalten.

## Beispiel 15

Ein Gemisch aus 140 g Allylbernsteinsäureanhydrid, 150 g Toluol und 0,2 g $H_2PtCl_6 \cdot 6\,H_2O$ wird auf 110°C erwärmt. Zu dieser erwärmten Mischung wird unter Rühren innerhalb von 3 Stunden eine Lösung von 150 g Trichlorsilan in 150 g Toluol gegeben. Nachdem noch 2 Stunden bei 115°C gerührt wurde, werden überschüssiges Trichlorsilan und etwa 100 g Toluol abdestilliert. Zum Rückstand werden 140 g Äthanol, das 6 Gewichtsprozent Wasser, bezogen auf das Gesamtgewicht von Wasser und Äthanol, enthält, tropfenweise gegeben. Nach 4 Stunden bei 40 bis 45°C ist die Entwicklung von Chlorwasserstoff beendet. Die so erhaltene Lösung wird zuerst mit 110 g Trimethylchlorsilan und dann mit 150 g Äthanol vermischt und 3 Stunden bei 50°C gerührt.

Die so erhaltene Mischung wird durch Zugabe von Wasser hydrolysiert und das Hydrolysat bis zur Säurefreiheit gewaschen. Nach Befreiung von bis zu 170°C Blassentemperatur und 0,5 mbar siedenden Bestandteilen verbleiben 270 g eines Öls mit einer Viskosität von 30 Pa · s bei −20°C, 0,398 Pa · s bei 23°C und 0,028 Pa · s bei 80°C.

Bei der in Beispiel 1 beschriebenen Prüfung auf Oxydationsbeständigkeit wird nach 2500 Stunden ohne Mitverwendung von Antioxydantien eine Gelierung beobachtet.

## Beispiel 16

In einem mit Rührer, Rückflußkühler und Thermometer ausgestatteten 1 l-Dreihalskolben werden 100 g Di-n-butyläther und 210 g eines durch Trimethylsiloxygruppen endblockierten Organopolysiloxans aus durchschnittlich 165 Dimethylsiloxan- und 30 Methylhydrogensiloxaneinheiten je Molekül auf 150°C erwärmt. 0,1 g $H_2PtCl_6 \cdot 6\,H_2O$ werden in 1,5 ml Isopropanol gelöst und mit 160 g Allylbernsteinsäuredi-n-butylester vermischt. Diese Mischung läßt man durch den Rückflußkühler zu der Polysiloxanlösung zufließen und rührt dann 7 Stunden bei 150°C. Bei einem Druck von etwa 20 mbar werden dann Lösungsmittel und überschüssiger Allylbernsteinsäuredi-n-butylester abdestilliert. Bei 0,5 mbar werden schließlich noch bis zu einer Sumpftemperatur von 190°C Restmengen flüchtiger Verbindungen abdestilliert.

Es verbleiben etwa 300 g eines Öls mit einer Viskosität von 0,121 Pa · s bei 140°C, von 2,26 Pa · s bei 23°C und von 260 Pa · s bei −45°C.

Bei der in Beispiel 1 beschriebenen Prüfung auf Oxydationsbeständigkeit wird ohne Mitverwendung von Antioxydantien nach 350 Stunden Gelbildung beobachtet.

Die Versagenslast des Öles wie in Beispiel 1 angegeben betriebenen 4-Kugel-Verschleißtest beträgt 400/600 N.

## Patentansprüche

1. Organosiloxane mit SiC-gebundenen Estergruppen, dadurch gekennzeichnet, daß sie mindestens eine Einheit der allgemeinen Formel

$$ROOCCH_2CH(COOR)CH_2CHR'CH_2Si(CH_3)_aO_{\frac{3-a}{2}}$$

worin R gleiche oder verschiedene, von aliphatischen Mehrfachbindungen freie einwertige, gegebenenfalls ein Äthersauerstoffatom aufweisende Kohlenwasserstoffreste mit 1 bis 12 Kohlenstoffatomen, R' Wasserstoff oder $CH_3$ und a 0, 1 oder 2 bedeutet, enthalten.

2. Organopolysiloxane nach Anspruch 1, dadurch gekennzeichnet, daß die restlichen Einheiten solche der allgemeinen Formel

$$R''_bSiO_{\frac{4-b}{2}}$$

worin R'' gleiche oder verschiedene, von aliphatischen Mehrfachbindungen freie, gegebenenfalls halogenierte Kohlenwasserstoffreste mit 1 bis 10 Kohlenstoffatomen und b 0, 1, 2 oder 3 bedeutet, sind und daß insgesamt 2 bis 200 Siliciumatome je Molekül vorliegen.

3. Verfahren zum herstellen von Organosiloxanen nach Anspruch 1 durch Anlagern von Ester mit einer aliphatischen Mehrfachbindung im Säurerest an Organosiloxan mit Si-gebundenem Wasserstoff in Gegenwart von die Anlagerung von Si-gebundenem Wasserstoff an aliphatische Mehrfachbindung förderndem Katalysator, dadurch gekennzeichnet, daß als Ester mit einer aliphatischen Mehrfachbindung im Säurerest mindestens ein Diester der Allylbernsteinsäure und/oder Methallylbernsteinsäure verwendet wird, wobei dieser Diester die allgemeine Formel

$$ROOCCH_2CH(COOR)CH_3CR'{=}CH_2$$

hat, worin R und R' die in Anspruch 1 dafür angegebene Bedeutung haben.

4. Verwendung der Organosiloxane nach Anspruch 1 als Schmiermittel oder Hydraulik-Flüssigkeiten.

## Claims

1. Organosiloxanes having SiC-bonded ester groups, characterised in that they contain at least one unit of the general formula:

$$ROOCCH_2CH(COOR)CH_2CHR'CH_2Si(CH_3)_aO_{\frac{3-a}{2}}$$

in which R represents identical or different, monovalent hydrocarbon radicals that are free from aliphatic multiple bonds, may optionally have an ether oxygen atom and has 1 to 12 carbon atoms, R' represents hydrogen or $CH_3$ and a represents 0, 1 or 2.

2. Organopolysiloxanes according to claim 1, characterised in that the remaining units are of the general formula

$$R''_bSiO_{\frac{4-b}{2}}$$

in which R'' represents identical or different, optionally halogenated, hydrocarbon radials that are free from aliphatic multiple bonds an and contain from 1 to 10 carbon atoms, and b represents 0, 1, 2 oder 3 and that a total of from 2 to 300 silicon atoms are present per molecule.

3. Process for the preparation of organosiloxanes according to claim 1, by the addition of an ester having an aliphatic multiple bond in the acid moiety to an organosiloxane containing Si-bonded hydrogen, in the presence of a catalyst promoting the addition of Si-bonded hydrogen to aliphatic multiple bonds, characterised in that, as the ester having an aliphatic multiple bond in the acid moiety, there is used at least one diester of allyl succinic acid and/or methallyl succinic acid, wherein that dieseter has the general formula:

$$ROOCCH_2CH(COOR)CH_3CR'{=}CH_2$$

in which R and R' have the meanings specified in claim 1.

4. Use of the organosiloxanes according to claim 1, as lubricants or hydraulic fluids.

**Revendications**

1. Organosiloxanes ayant des groupes esters à liaison du type SiC, caractérisé en ce qu'ils contiennent au moins un motif répondant à la formule générale

$$ROOCCH_2CH(COOR)CH_2CHR'CH_2Si(CH_3)_aO_{\frac{3-a}{2}}$$

dans laquelle R désigne des radicaux hydrocarbonés en $C_1$ à $C_{12}$ identiques ou différents, exempts de liaisons multiples aliphatiques, monovalents, présentant le cas échéant un atome d'oxygène de fonction éther, R' désigne l'hydrogène ou $CH_3$ et a est égal à 0, à 1 ou à 2.

2. Polyorganosiloxanes suivant la revendication 1, caractérisés en ce que les autres motifs sont des motifs répondant à la formule générale

$$R''_bSiO_{\frac{4-b}{2}}$$

dans laquelle R'' désigne des radicaux hydrocarbonés en $C_1$ à $C_{10}$ identiques ou différents, exempts de liaisons multiples aliphatiques, le cas échéant halogénés, et b est égal à 0, à 1, à 2 ou à 3, et en ce que chaque molécule contient en tout de 2 à 300 atomes de silicium.

3. Procédé de préparation d'organosiloxanes suivant la revendication 1 par fixation d'un ester ayant une liaison multiple aliphatique dans le radical acide sur un organosiloxane ayant de l'hydrogène lié au silicium, en présent d'un catalyseur favorisant la fixation de l'hydrogène lié au silicium sur une liaison multiple aliphatique, procédé caractérisé en ce qu'on utilise, comme ester ayant une liaison multiple aliphatique dans le radial acide, au moins un diester de l'acide allylsuccinique et/ou de l'acide méthallylsuccinique, ce diester répondant à la formule générale

$$ROOCCH_2CH(COOR)CH_3CR'{=}CH_2$$

dans laquelle R et R' ont la signification indiquée à la revendication 1.

4. Utilisation des organosiloxanes suivant la revendication 1 comme lubrifiants ou comme liquides hydrauliques.